(19) 〔Europäisches Patentamt / European Patent Office / Office européen des brevets〕

(11) **EP 4 722 178 A1**

(12) **EUROPEAN PATENT APPLICATION**
published in accordance with Art. 153(4) EPC

(43) Date of publication:
**08.04.2026 Bulletin 2026/15**

(21) Application number: 24815285.2

(22) Date of filing: **21.05.2024**

(51) International Patent Classification (IPC):
*C04B 35/44* (2006.01)   *C04B 35/50* (2006.01)
*G02B 27/28* (2006.01)   *G02F 1/09* (2006.01)

(52) Cooperative Patent Classification (CPC):
**C04B 35/44; C04B 35/50; G02B 27/28; G02F 1/09**

(86) International application number:
**PCT/JP2024/018600**

(87) International publication number:
**WO 2024/247801 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023 JP 2023088728**

(71) Applicant: **SHIN-ETSU CHEMICAL CO., LTD.**
**Tokyo 100-0005 (JP)**

(72) Inventors:
• **TANAKA, Keita**
  **Annaka-shi, Gunma 379-0195 (JP)**
• **IKARI, Masanori**
  **Annaka-shi, Gunma 379-0195 (JP)**

(74) Representative: **HGF**
**HGF Limited**
**4th Floor, 1 City Square**
**Leeds LS1 2ES (GB)**

(54) **TRANSPARENT CERAMIC FOR MAGNETO-OPTICAL ELEMENTS AND MAGNETO-OPTICAL DEVICE**

(57)    Provided are a transparent ceramic for a magneto-optical element and a magneto-optical device, which have practical transparency applicable to high power, and have a high thermal conductivity as compared with the related art, even a composite oxide containing a rare earth element having a large ionic radius. The transparent ceramic for a magneto-optical element includes a sintered body of a composite oxide represented by Formula (1),

$$(Tb_{1-x-y}R1_xR2_y)_3Al_5O_{12} ... \qquad \text{Formula (1)}$$

wherein R1 represents Y or Lu, R2 represents Gd or La, and $0 < x \leq 0.4$, $0 < y \leq 0.4$, and $0.05 \leq x + y \leq 0.45$ are satisfied. An average ionic radius of a rare earth element in the composite oxide satisfies Formula (2),

$$\text{Average ionic radius} = (1 - x - y)D_{Tb} + xD_{R1} + yD_{R2} < 104.2 ... \text{ Formula (2)}$$

wherein, $D_{Tb}$ represents an ionic radius of $Tb^{3+}$ at an 8-coordination site, $D_{R1}$ represents an ionic radius of $R1^{3+}$ at the 8-coordination site, and $D_{R2}$ represents an ionic radius of $R2^{3+}$ at the 8-coordination site. The magneto-optical device is an optical isolator including the transparent ceramic as a Faraday rotator 110.

EP 4 722 178 A1

**(Cont. next page)**

# FIG. 1

**Description**

TECHNICAL FIELD

The present invention relates to transparent ceramics for magneto-optical elements and to magneto-optical devices, and more specifically relates to transparent ceramics for magneto-optical elements suitable for constituting magneto-optical devices such as optical isolators, and to magneto-optical devices using the same.

BACKGROUND ART

In recent years, laser processing machines using fiber lasers have been very popular since they make it possible to increase output. In addition, in a laser light source incorporated in a laser processing machine, in a case in which light from the outside is incident thereon, a phenomenon occurs in which a resonance state becomes unstable and an oscillation state is disturbed. In particular, in a case in which oscillating light is reflected by an optical system in the middle and is returned to the light source, the oscillation state undergoes significant disturbance. In order to prevent the disturbance, an optical isolator is usually provided, for example, in front of the light source.

The optical isolator is a magneto-optical device including a Faraday rotator, a polarizer disposed on a light incident side of the Faraday rotator, and an analyzer disposed on a light emission side of the Faraday rotator. In addition, the Faraday rotator is a magneto-optical element used by applying a magnetic field in parallel with a traveling direction of light. In this case, a polarization line segment of the light rotates only in a certain direction regardless of whether the light moves forward or backward in the Faraday rotator. Furthermore, the Faraday rotator is adjusted to have a length such that the polarization line segment of the light rotates by just 45 degrees. Here, when polarization planes of the polarizer and the analyzer are deviated by 45 degrees in the rotation direction of the light traveling forward, the polarization of the light traveling forward is transmitted as the polarization aligns with the position of the polarizer and the position of the analyzer. In addition, the polarization of the light traveling backward rotates in the reverse by 45 degrees with respect to the deviation angle direction of the polarization plane of the polarizer deviated by 45 degrees from the position of the analyzer. In that case, the polarization plane of the return light at the position of the polarizer deviates by 45 degrees - (-45 degrees) = 90 degrees with respect to the polarization plane of the polarizer, and the polarization of the light traveling backward cannot be transmitted through the polarizer. In this way, the optical isolator functions to transmit and emit the light traveling forward, and to block the return light traveling backward.

As a material used as a Faraday rotator constituting the optical isolator, a TGG ($Tb_3Ga_5O_{12}$) crystal or ceramic, or a TAG ($Tb_3Al_5O_{12}$) ceramic has been known in the related art (Patent Documents 1 and 2). In addition, the inventors of the present application have developed ($Y_xTb_{1-x})_3Al_5O_{12}$ (hereinafter, referred to as "Y-TAG") or ($Lu_xTb_{1-x})_3Al_5O_{12}$ (hereinafter, referred to as "Lu-TAG") in which a part of the A site of TAG is substituted with Y or Lu (Patent Documents 3 and 4).

REFERENCE DOCUMENT LIST

PATENT DOCUMENTS

Patent Document 1: JP 2011-213552 A

Patent Document 2: JP 6438588 B

Patent Document 3: JP 6879264 B

Patent Document 4: JP 6881390 B

SUMMARY OF THE INVENTION

PROBLEM TO BE SOLVED BY THE INVENTION

TGG crystals are currently widely used being mounted for a standard fiber laser device. However, since the TGG crystal has a high absorption coefficient, it is said that the maximum usable laser power is 80 W. In addition, the TAG crystal has a higher rotation angle performance than the rotation angle performance of the TGG crystal and can handle a laser having an output higher than in the case of the TGG crystal, but the absorption coefficient is about the same as the absorption coefficient of the TGG crystal, and there is a limit to an increase in output. The Y-TAG ceramic has an absorption coefficient lower than the absorption coefficient of the TAG ceramic, and thus can achieve an increase in output, but the thermal conductivity decreases. Therefore, the Y-TAG ceramic cannot be mounted in a high power laser at 200 W or greater. A KTF single crystal has an extremely small absorption coefficient, and thus is suitable for high power applications. However, since the laser damage threshold value is low, there is a possibility of damage in a short pulse laser.

In addition, as the characteristics of the Y-TAG and the Lu-TAG, (1) the absorption coefficient is less than the absorption coefficient of TAG or TGG because the concentration of Tb is low, (2) the Verdet constant is equivalent to the Verdet constant of TGG of a material of the related art, and (3) the thermal conductivity is greater than or equal to the thermal conductivity of TGG of a material of the related art, and thus the Y-TAG and the Lu-TAG can be used as a high-power Faraday rotator as compared with a material of the related art. The rare earth element to be substituted with the TAG-based Faraday rotator has so far been limited to Y or elements with atomic numbers 66 to 71. This is because Y or rare earth elements with atomic numbers 66 to 71 have 8-coordination and a trivalent ionic radius of 104 pm or less, and thus, aluminum garnet is stably generated. It has been generally known that the rare earth elements with atomic numbers 57 to 64 have 8-coordination and a trivalent ionic radius of greater than 104 pm, and do not generate aluminum garnet when substituted with the A site of TAG.

The present invention has been made in consideration of the above-described circumstances, and an object of the present invention is to provide a transparent ceramic for a magneto-optical element which has a high thermal conductivity and is in the best group in terms of the absorption coefficient as compared with a Faraday rotator of the related art even when the transparent ceramic contains a composite oxide containing a rare earth element having a large ionic radius, a change rate of a beam diameter due to a thermal lens is 10% or less even when the transparent ceramic is irradiated with laser light at 100 W or greater, and thus, the transparent ceramic has practical transparency applicable for high power and is easily scaled up because the transparent ceramic is a ceramic sintered body, and a magneto-optical device using the same.

MEANS FOR SOLVING THE PROBLEM

In order to achieve the above-described object, as an aspect of the present invention, there is provided a transparent ceramic for a magneto-optical element, including: a sintered body of a composite oxide represented by Formula (1),

$$(Tb_{1-x-y}R1_xR2_y)_3Al_5O_{12} \text{ ...} \qquad \text{Formula (1)}$$

in the formula, R1 represents an element selected from the group consisting of Y and Lu, R2 represents an element selected from the group consisting of Gd and La, and $0 < x \leq 0.4$, $0 < y \leq 0.4$, and $0.05 \leq x + y \leq 0.45$ are satisfied), in which an average ionic radius of a rare earth element in the composite oxide satisfies Formula (2),

$$\text{average ionic radius} = (1 - x - y)D_{Tb} + xD_{R1} + yD_{R2} < 104.2 \text{ ... Formula (2)}$$

in the formula, $D_{Tb}$ represents an ionic radius of $Tb^{3+}$ at an 8-coordination site, $D_{R1}$ represents an ionic radius of $R1^{3+}$ at the 8-coordination site, and $D_{R2}$ represents an ionic radius of $R2^{3+}$ at the 8-coordination site.

The transparent ceramic for a magneto-optical element of the present invention may further contain Sc as a sintering aid in an amount of 3% by mass or less. In addition, the transparent ceramic for a magneto-optical element of the present invention may further contain Si as a sintering aid in an amount of 100 ppm by mass or greater and 1000 ppm by mass or less. R1 may represent Lu and R2 may represent Gd.

It is preferable that the transparent ceramic for a magneto-optical element of the present invention have a thermal conductivity of 4.5 W/m·K or greater. It is preferable that the transparent ceramic for a magneto-optical element of the present invention have a linear transmittance of 78% or greater at 1060 nm. It is preferable that the transparent ceramic for a magneto-optical element of the present invention have a Verdet constant of 30 Rad/T·m or greater.

According to another aspect of the present invention, there is provided a magneto-optical device including: the above-described transparent ceramic for a magneto-optical element.

The magneto-optical device of the present invention may be an optical isolator that includes the above-described transparent ceramic for a magneto-optical element as a Faraday rotator and includes polarizing materials in front and rear of the Faraday rotator on an optical axis, and that is usable in a wavelength range of 0.9 μm or greater and 1.1 μm or less.

EFFECTS OF THE INVENTION

According to the present invention, it is possible to provide a transparent ceramic for a magneto-optical element which has a high thermal conductivity and is in the best group in terms of the absorption coefficient as compared with a Faraday rotator of the related art when the transparent ceramic contains a composite oxide containing terbium, yttrium or lutetium as a rare earth element having a small ionic radius, and lanthanum or gadolinium as a rare earth element having a large ionic radius, and an average ionic radius of the rare earth elements in the composite oxide is set to be less than 104.2 pm, a change rate of a beam diameter due to a thermal lens is 10% or less even when the transparent ceramic is irradiated with laser light at 100 W or greater, and thus, the transparent ceramic has practical transparency applicable for high power and is easily scaled up because the transparent ceramic is a ceramic sintered body, and a magneto-optical device using the same.

## BRIEF DESCRIPTION OF THE DRAWINGS

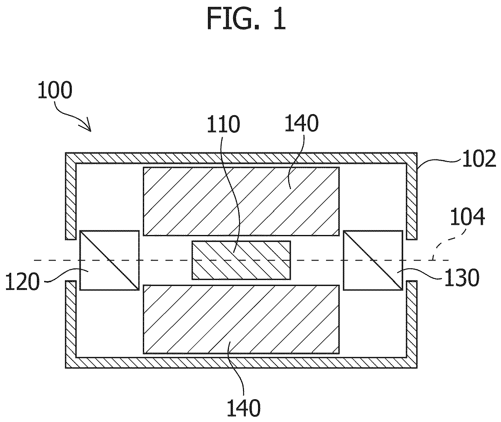

[FIG. 1] This is a schematic cross-sectional view illustrating an example of a configuration of an optical isolator using a transparent ceramic for a magneto-optical element according to the present invention as a Faraday rotator.

## MODE FOR CARRYING OUT THE INVENTION

### 1. Transparent ceramic for magneto-optical element

First, an embodiment of a transparent ceramic for a magneto-optical element according to the present invention will be described. The transparent ceramic for a magneto-optical element according to the present embodiment includes a sintered body of a composite oxide represented by Formula (1).

$$(Tb_{1-x-y}R1_xR2_y)_3Al_5O_{12} \dots \qquad (1)$$

In Formula (1), terbium (Tb) is a material having the highest Verdet constant among paramagnetic elements excluding iron (Fe). In particular, when terbium is contained in an oxide having a garnet structure, terbium is completely transparent at a wavelength of 1064 nm, and is thus the most suitable element to be used for an optical isolator in the above-described wavelength region.

R1 represents an element having an ionic radius less than the ionic radius of $Tb^{3+}$, and can be selected from the group consisting of Y and rare earth elements with atomic numbers 66 to 71. These can be generated as aluminum garnet alone, but the present embodiment is to provide aluminum garnet for a Faraday rotator, which has not been provided so far, by compounding with a rare earth element having a large ionic radius described below. Furthermore, when the wavelength used is in a visible to near infrared range, yttrium (Y) or lutetium (Lu) which is colorless in the corresponding wavelength range is used as R1.

Among these, Lu has the smallest ionic radius among lanthanoid elements, and when Lu is combined with aluminum to form a composite oxide, a garnet phase is stably formed rather than a perovskite phase. Therefore, Lu is an element that can be preferably used in the present embodiment. In addition, since Lu does not have characteristic absorption (f-f transition) in a visible to near infrared range as compared with other rare earth elements, Lu is an optimum element for addition.

R2 represents an element having an ionic radius greater than the ionic radius of $Tb^{3+}$, and can be selected from the group consisting of rare earth elements with atomic numbers 60 to 64. Such an element having an ionic radius greater than the ionic radius of $Tb^{3+}$ is an element that is not originally generated as aluminum garnet, but it is possible to provide aluminum garnet for a Faraday rotator that has not thus far been provided by compounding with the above-described element having a small ionic radius. Furthermore, when the use wavelength is in a visible to near infrared range, gadolinium (Gd) or lanthanum (La) which is colorless in the corresponding wavelength range is used as R2.

Among these, Gd is advantageous for generating aluminum garnet by compounding with a rare earth element having an ionic radius which is small and close to the ionic radius of $Tb^{3+}$. In addition, since Gd does not have characteristic absorption (f-f transition) in a visible to near infrared range, Gd is an optimum element for adding to the Faraday rotator.

At the B site of Formula (1), aluminum (Al) is a material having the smallest ionic radius among trivalent ions that can be stably present in an oxide having a garnet structure, and is an element that can make the lattice constant of a Tb-containing paramagnetic garnet-type oxide the smallest. It is preferable that the lattice constant of the garnet structure can be reduced without changing the content of Tb from the viewpoint that the Verdet constant per unit length can be increased. Furthermore, since aluminum is a light metal, the diamagnetism is weaker than the diamagnetism of gallium, and thus, aluminum is expected to have an effect of relatively increasing the magnetic flux density generated inside the Faraday rotator, which also makes it possible to increase the Verdet constant per unit length. Therefore, aluminum is preferably used. The Verdet constant of an actual TAG ceramic is increased to 1.25 to 1.5 times the Verdet constant of TGG. Therefore, even when the relative concentration of terbium is decreased by substituting some terbium ions with other rare earth elements, the Verdet constant per unit length can be kept to be the same as or slightly lower than the Verdet constant of TGG, and thus, the constituent element is suitable in the present embodiment.

In Formula (1), x and y are in ranges of $0 < x \leq 0.4$, $0 < y \leq 0.4$, and $0.05 \leq x + y \leq 0.45$. When x + y is less than 0.05, an effect of substituting some terbium with other rare earth elements cannot be obtained, the conditions for substantially preparing TAG do not change, and thus, it is not preferable from the viewpoint that a high-quality ceramic sintered body with low scattering and low absorption is difficult to stably produce. In addition, when x + y is greater than 0.45, the Verdet constant at a wavelength of 1064 nm is less than 30 rad/(T·m), which is not preferable. Furthermore, it is not preferable that the relative concentration of terbium be excessively low from the viewpoint that the total length necessary for rotating laser light having a wavelength of 1064 nm by 45 degrees is increased and is greater than 25 mm, which is greater than the total length of a TGG single crystal. x + y is more preferably in a range of $0.1 \leq x + y \leq 0.4$.

Here, the average ionic radius of the rare earth elements in the composite oxide of Formula (1) can be determined by Formula (2), and as shown in Formula (2), the average ionic radius is less than 104.2 pm.

$$\text{Average ionic radius} = (1 - x - y)D_{Tb} + xD_{R1} + yD_{R2} < 104.2 \ ... \ \text{Formula (2)}$$

(In the formula, $D_{Tb}$ represents an ionic radius of $Tb^{3+}$ at an 8-coordination site, $D_{R1}$ represents an ionic radius of $R1^{3+}$ at the 8-coordination site, and $D_{R2}$ represents an ionic radius of $R2^{3+}$ at the 8-coordination site.)

When the average ionic radius is greater than 104.2 pm, garnet cannot be generated, which is not appropriate. The average ionic radius is preferably 104.0 pm or less, more preferably 103.0 pm or less, and still more preferably 102.0 pm or less. The lower limit of the average ionic radius is not particularly limited as long as aluminum garnet can be generated, and may be, for example, 97.0 pm. Furthermore, the ionic radius of each element can refer to the information in the document such as Shannon et al., Acta A 32 (1976) 751.

The transparent ceramic for a magneto-optical element according to the present embodiment contains, as a main component, a composite oxide represented by Formula (1). Here, the expression "containing as a main component" denotes that the transparent ceramic contains the composite oxide represented by Formula (1) in an amount of 90% by mass or greater. The content of the composite oxide represented by Formula (1) is preferably 99% by mass or greater, more preferably 99.9% by mass or greater, still more preferably 99.99% by mass or greater, and particularly preferably 99.999% by mass or greater.

As a sub-component, 100 ppm by mass or greater and 1000 ppm by mass or less of silicon (Si) which serves as a sintering aid may be added to the transparent ceramic for a magneto-optical element according to the present embodiment. When a predetermined amount of Si is added as a sintering aid, the precipitation of a perovskite type heterogeneous phase is suppressed, and thus, the transparency of the transparent ceramic for a magneto-optical element can be ensured. Furthermore, Si added in a predetermined amount is vitrified during sintering at 1400°C or higher, which provides a liquid phase sintering effect and can promote densification of the sintered body of the composite oxide. However, when Si is added in an amount greater than 1000 ppm by mass, the beam diameter change rate is 10% or greater when the transparent ceramic for a magneto-optical element having a length (optical path length) of 20 mm is irradiated with 100 W laser light having a wavelength of 1064 nm. Therefore, it is necessary to set the amount of Si to be added to 1000 ppm by mass or less.

Furthermore, Si as a sintering aid can be added, for example, as a Si-based inorganic compound such as $SiO_2$ or a Si-based polymer compound such as tetraethoxysilane (TEOS). Here, the amount of Si to be added is adjusted to 100 ppm by mass or greater and 1000 ppm by mass or less in terms of Si.

In addition, scandium (Sc) may be added as the sintering aid in addition to or instead of Si. When Sc is added, similarly to Si, the precipitation of a perovskite type heterogeneous phase is suppressed, and thus, the transparency of the transparent ceramic for a magneto-optical element can be improved. In addition, since Sc is an element that can form a solid solution at both the A site and the B site of a garnet-type structure, the transparent ceramic is easily produced as the amount of Sc to be added increases. However, Sc is expensive, and thus, the material cost increases when a large amount of Sc is added. Therefore, it is not preferable to add Sc in an amount greater than 3.5% by mass, and it is more preferable to add Sc in an amount 3.0% by mass or less. When Sc is added, the lower limit of the amount of Sc to be added is preferably, for example, 0.5% by mass or greater in order to sufficiently exhibit the effect of the addition.

Sc can be added as a scandium compound which is not limited to organic and inorganic compounds, for example, an oxide such as $Sc_2O_3$, scandium fluoride, scandium nitrate, and scandium isopropoxide. The addition amount is adjusted to obtain the above-described concentration in terms of Sc when Sc is added as a scandium compound.

In the present specification, the term "amount to be added" indicates an amount of a sintering aid to be intentionally added. Therefore, when the amount to be added is 0 ppm by mass, this indicates that there is no intentional addition of the sintering aid. Furthermore, a case in which the corresponding element is contained as an impurity in the raw material powder is excluded.

The transparent ceramic for a magneto-optical element of the present invention includes the above-described main components and sub-components, but may further contain other elements. Typical examples of the other elements include rare earth elements such as cerium (Ce), and various impurity groups such as sodium (Na), calcium (Ca), magnesium (Mg), phosphorus (P), tungsten (Ta), and molybdenum (Mo). The content of other elements is preferably 10 parts by mass or less, more preferably 0.1 parts by mass or less, and particularly preferably 0.001 parts by mass or less when the total amount of Tb is set to 100 parts by mass.

The transparent ceramic for a magneto-optical element according to the present embodiment has a colorless and transparent appearance, and has a linear transmittance of 78% or greater at a wavelength of 1064 nm with an optical path length of 20 mm. Furthermore, in the present specification, the term "linear transmittance" denotes a linear transmittance when a transmission spectrum measured in a blank (space) state without placing a sample in a measurement optical path is set to 100%. In addition, it is more preferable that the linear transmittance under the above-described conditions be 80% or greater. The upper limit of the linear transmittance is not particularly limited, but may be, for example, 86% or less.

In the transparent ceramic for a magneto-optical element of the present embodiment, the Verdet constant at a wavelength of 1064 nm is preferably 30 rad/(T·m) or greater and is more preferably 36 rad/(T·m) or greater. It is particularly preferable that the Verdet constant is 36 rad/(T·m) or greater from the viewpoint that the replacement with a TGG single crystal, which is an existing material, can be easily performed without a change of component design. The upper limit of the Verdet constant under the above-described conditions is not particularly limited, but may be set to, for example, 60 rad/(T·m) or less.

The thermal conductivity of the transparent ceramic for a magneto-optical element according to the present embodiment is preferably 4.5 W/m·K or greater and more preferably 4.8 W/m·K or greater. When the thermal conductivity is 4.5 W/m·K or greater, the thermal lens effect can be reduced, which is preferable. The upper limit of the thermal conductivity is not particularly limited, but may be set to, for example, 8.0 W/m·K or less.

In addition, in the transparent ceramic for a magneto-optical element according to the present embodiment, when laser light having a wavelength of 1064 nm with an optical path length of 20 mm is incident with a beam diameter of 1.6 mm and an incident power of 200 W, the beam diameter change rate due to a thermal lens is 10% or less. When the beam diameter change rate due to the thermal lens is 10% or less at a certain incident power, the system can be mounted at the incident power, that is, the thermal lens properties are acceptable. In the transparent ceramic for a magneto-optical element according to the present embodiment, the beam diameter change rate due to the thermal lens can be managed to be 10% or less in the incidence at a high power of 100 W. Therefore, the material can be substantially employed in a high power laser system for 100 W. The lower limit of the beam diameter change rate under the above-described conditions is not particularly limited, but may be set to, for example, 0.1% or greater.

In the transparent ceramic for a magneto-optical element according to the present embodiment, the extinction ratio is 40 dB or greater as the ceramic element alone. When the composition is in the above-described range shown in Formula (1), material defects such as distortions and point defects are drastically reduced, and thus, the extinction ratio of the material element alone is stably managed to be 40 dB or greater. The upper limit of the extinction ratio is not particularly limited, but may be set to, for example, 50 dB or less.

## 2. Method of producing transparent ceramic for magneto-optical element

A method of producing the transparent ceramic for a magneto-optical element according to the present embodiment includes, for example, a step of press-molding raw material powder, a step of degreasing the molded body, a step of sintering the molded body to obtain a sintered body densified with a relative density of at least 95% or greater, a step of performing a hot isostatic pressing (HIP) treatment on the sintered body, and a step of performing an annealing treatment on the sintered body. Hereinafter, the raw material powder and each step will be described in detail.

## 2-1. Raw material powder

As a starting raw material used in the present production method, each metal powder of terbium, yttrium, lutetium, gadolinium, lanthanum, or aluminum, an aqueous solution of the nitric acid, the sulfuric acid, the uric acid, or the like of the metal powder, an oxide powder of the above-described elements, or the like can be suitably used.

The preparation of the raw material powder is roughly classified into two types of a breakdown type and a build-up type, but is not particularly limited as long as the ceramic can be made transparent. The build-up type is a method of pulverizing various powders to adjust a raw material powder for molding, and has an advantage in productivity, but has a problem in uniformity of the composition. In addition, the build-up type is a method of obtaining a powder by nucleation and particle growth from a solution of various elements, which has a great advantage in uniformity of composition, but is inferior in productivity and reproducibility. In the present embodiment, the type is not particularly limited as long as the ceramic can be made highly transparent.

In the breakdown type, it is most preferable that various oxide powders be weighed and subjected to a wet or dry pulverization treatment. The purity of each of the various oxide powders is preferably 99.9% or greater, and more preferably 99.99% or greater. In addition, the primary particle diameter of each of the various powders is preferably 0.05

μm or greater and 100 μm or less. It is not preferable that the primary particle diameter be less than 0.05 μm from the viewpoint that the uniformity of the ceramic is difficult to control due to high aggregating properties of the particles and the densification rapidly occurs in the sintering step, which makes it difficult to control the emission of air bubbles. In addition, it is not suitable that the primary particle diameter be greater than 100 μm because the particles cannot be pulverized into fine particles by wet pulverization or dry pulverization. The pulverization treatment may be performed by any of a wet type treatment or a dry type treatment, and any of a ball mill treatment, a bead mill treatment, a jet mill treatment, and a homogenizer treatment can be suitably used. It is preferable that the pulverization treatment be performed until the center value (D50) of the particle size distribution of the primary particles becomes less than 1 μm.

In the build-up type, a method of synthesizing a powder from a solution containing various elements and sintering the powder at 1300°C or less is preferable. Examples of the precursors of the various elements include a chloride, a nitrate, a carbonate, and a sulfate, and the present invention is not particularly limited thereto. Furthermore, examples of a method of synthesizing a powder include a coprecipitation method, a polymerized complex method, and a homogeneous precipitation method, and the method is not particularly limited as long as a highly transparent ceramic can be produced. In any synthesis method, the primary particle diameter is preferably 0.05 μm or greater, and the shape of the primary particles is not particularly limited. Depending on properties of the obtained powder, the pulverization treatment may be performed by a wet type treatment or a dry type treatment after sintering, and as in the breakdown type, the pulverization method is not particularly limited.

Furthermore, organic additives such as dispersants, binding agents, plasticizers, and lubricants may be added to improve the subsequent production yield stability and quality. In that case, a method of performing wet pulverization and adding the additives into a slurry is preferable from the viewpoint that the method is the most stable. The amount of the additives to be added is not particularly limited as long as target properties can be obtained.

### 2-2. Molding step

In the present production method, a typical press molding step can be suitably used. That is, a pressing step of filling a mold and performing pressurization on the mold in a certain direction, or a cold isostatic pressing (CIP) step or a warm isostatic pressing (WIP) step of carrying out airtight storing in a deformable waterproof container and performing pressurization at a hydrostatic pressure, which are extremely typical steps, can be suitably used. Furthermore, the pressure to be applied may be appropriately adjusted while the relative density of a molded body to be obtained is confirmed, and the pressure is not particularly limited. Alternatively, a hot press step, a discharge plasma sintering step, a microwave heating step, or the like in which not only a molding step but also sintering are performed at the same time during molding can be suitably used. Furthermore, a molded body can also be prepared by a slip molding method instead of the press molding method. Molding methods such as pressure slip molding, centrifugal slip molding, and extrusion molding can also be adopted by optimizing combinations of the shape and size of an oxide powder as a starting raw material and various organic additives.

### 2-3. Degreasing step

In the present production method, a typical degreasing step can be suitably used. That is, a temperature raising and degreasing step can be performed by a heating furnace. In addition, in this case, the type of atmospheric gas is also not particularly limited, and air, oxygen, hydrogen, or the like can be suitably used. The degreasing temperature is also preferably 270°C or higher and 1000°C or lower. When the degreasing temperature is lower than 270°C, the organic additives are difficult to completely remove. In addition, when the degreasing temperature is higher than 1000°C, densification proceeds before the sintering step, and thus, a transparent sintered body with low scattering is difficult to obtain.

### 2-4. Sintering step

In the present production method, a typical sintering step can be suitably used. That is, a heating and sintering step such as a resistance heating method or an induction heating method can be suitably used. In this case, the atmosphere is not particularly limited, and various atmospheres such as inert gas, oxygen gas, hydrogen gas, and helium gas, or sintering under reduced pressure (in a vacuum) can be adopted. However, it is most preferable that the sintering be performed in a vacuum in which high transparency can be realized.

The sintering temperature in the sintering step is preferably 1400°C to 1780°C and particularly preferably 1450°C to 1750°C. It is preferable that the sintering temperature be in the above-described ranges from the viewpoint that densification is promoted while the precipitation of the heterogeneous phase is suppressed.

The sintering holding time in the sintering step is sufficient for about several hours, but the sintered body is required to be densified with a relative density of at least 93% or greater. It is not suitable that the relative density be less than 93% because a transparent body cannot be obtained in the subsequent HIP treatment step. It is necessary to manage the sintering holding time in order for the sintered body to have a relative density of 93% or greater.

The crystal particle diameter in the sintering step is preferably 1 μm or greater and 40 μm or less and more preferably 5 μm or greater and 35 μm or less. It is not suitable that the crystal particle diameter be less than 1 μm because the degree of transparency deteriorates due to the minute compositional deviation between crystal particles. It is also not preferable that the crystal particle diameter be 40 μm or greater from the viewpoint that there is a risk of occurrence of desulfurization in the polishing which is a subsequent step. The sintering temperature and the sintering holding time are preferably set to have the crystal particle diameter is in the above-described ranges.

## 2-5. Hot isostatic pressing (HIP) treatment step

In the present production method, a hot isostatic pressing (HIP) treatment is further performed after the sintering step. As the type of the pressing gas medium used in the HIP treatment step, an inert gas such as argon or nitrogen or Ar-O$_2$ can be suitably used. The pressure to be applied by the pressing gas medium is preferably 50 to 300 MPa and more preferably 100 to 300 MPa. When the pressure is less than 50 MPa, the effect of improving the transparency cannot be obtained in some cases. In addition, when the pressure is greater than 300 MPa, no further improvement can be obtained in transparency even when the pressure is increased. It is simple and preferable that the applied pressure be 196 MPa or less, which is a value that can be treated by a commercially available HIP device.

In addition, the treatment temperature in the HIP treatment step is set to be in a range of 1000°C to 1780°C, and preferably in a range of 1100°C to 1730°C. It is not preferable that the treatment temperature be higher than 1780°C from the viewpoint that the risk of oxygen deficiency is increased. In addition, when the heat treatment temperature is lower than 1000°C, the effect of improving the transparency of the sintered body is hardly obtained. Furthermore, the holding time at the heat treatment temperature is not particularly limited, but it is not preferable that the holding be performed for an extremely long time from the viewpoint that the risk of oxygen deficiency is increased. Typically, the holding time is preferably set to be in a range of 1 to 3 hours.

Furthermore, the heater material, the heat insulating material, and the treatment container for the HIP treatment are not particularly limited. However, graphite, molybdenum (Mo), tungsten (W), and platinum (Pt) can be suitably used, and yttrium oxide and gadolinium oxide can also be suitably used as the treatment container. In particular, it is preferable that the treatment temperature be 1500°C or lower from the viewpoint that platinum (Pt) can be used as the heater material, the heat insulating material, and the treatment container, and Ar-O$_2$ can be used as the pressing gas medium, which can prevent the occurrence of oxygen deficiency during the HIP treatment.

When the treatment temperature is 1500°C or higher, graphite is preferable as the heater material and the heat insulating material. In this case, it is preferable that any of graphite, molybdenum (Mo), and tungsten (W) be selected as the treatment container, any of yttrium oxide and gadolinium oxide be selected as a double container inside the treatment container, and the container be filled with an oxygen releasing material from the viewpoint that the amount of oxygen deficiency occurring during the HIP treatment can be suppressed as much as possible.

Furthermore, in order to further reduce scattering after the HIP treatment step, a sintering step may be performed again, and the HIP treatment step may be further performed. The number of times for the sintering step and the HIP treatment step is not particularly limited, and the steps may be repeated until low scattering is achieved.

## 2-6. Annealing treatment step

In the present production method, oxygen deficiency may occur in the obtained transparent sintered body after the HIP treatment step is completed, and the transparent sintered body may have a slightly light gray appearance. In such a case, it is preferable to perform an annealing treatment (oxygen deficiency recovery treatment) in an oxygen atmosphere or an air atmosphere at a temperature lower than or equal to the treatment temperature in the HIP treatment step, typically 1000°C to 1500°C. In this case, the holding time is not particularly limited. However, the holding time may be sufficiently long to recover the oxygen deficiency, and is preferably 10 hours or longer, and more preferably 20 hours or longer.

By such an annealing treatment, even when a ceramic sintered body has a slightly light gray appearance in the HIP treatment step, a transparent ceramic for a magneto-optical element, which is colorless and transparent, and has less absorption by defects, can be obtained.

## 2-7. Optical polishing

In the present production method, it is preferable that both end surfaces on an optical axis of the paramagnetic garnet-type transparent ceramic obtained through the above-described series of steps be optically polished. In this case, the optical surface accuracy is preferably λ/2 or less and particularly preferably λ/8 or less at a measurement wavelength λ of 633 nm. Furthermore, the optical loss can be further reduced by appropriately forming an anti-reflection film on the optically polished surface.

As described above, the transparent ceramic for a magneto-optical element, which contains the sintered body of the composite oxide represented by Formula (1), can be produced. By preparing the transparent ceramic under the above-described production conditions, a transparent ceramic for a magneto-optical element in which the linear transmittance at a wavelength of 1064 nm with a length (optical path length) of 20 mm is 78% or greater can be provided. In addition, a magneto-optical material having a thermal conductivity of 4.5 W/m·K or greater, a Verdet constant of 30 rad/(T·m) or greater at a wavelength of 1064 nm, and a beam diameter change rate of 10% or less due to a thermal lens when laser light having a wavelength of 1064 nm with an optical path length of 20 mm is incident with a beam diameter of 1.6 mm and an incident power of 100 W can be provided.

### 3. Magneto-optical device

The above-described paramagnetic garnet-type transparent ceramic is used as a magneto-optical element, and the magneto-optical device of the present embodiment is formed of the above-described paramagnetic garnet-type transparent ceramic. Specifically, it is preferable that a magneto-optical device be formed and used by applying a magnetic field in parallel with the optical axis of the paramagnetic garnet-type transparent ceramic and setting a polarizer and an analyzer in a manner that the optical axes deviate from each other by 45 degrees. In particular, the transparent ceramic is particularly suitably used as a Faraday rotator of an optical isolator having a wavelength of 0.9 to 1.1 $\mu$m.

FIG. 1 is a cross-sectional view schematically illustrating an example of an optical isolator which is a magneto-optical device, and the optical isolator includes a magneto-optical element including the above-described paramagnetic garnet-type transparent ceramic as a Faraday rotator. As illustrated in FIG. 1, an optical isolator 100 includes a Faraday rotator 110 formed of the above-described paramagnetic garnet-type transparent ceramic, and a polarizer 120 and an analyzer 130 formed of a polarization material inside a housing 102. These are disposed in the order of the polarizer 120, the Faraday rotator 110, and the analyzer 130 along an optical axis 104 of the Faraday rotator. A polarizing vibration surface of the polarizer 120 and a polarizing vibration surface of the analyzer 130 are disposed in a manner that a relative angle is 45°. In addition, the optical isolator 100 includes a magnet 140 for applying a magnetic field to the Faraday rotator 110, specifically to at least one of the side surfaces of the Faraday rotator 110 in the housing 102.

Such an optical isolator 100 can be suitably used for an industrial fiber laser device (not illustrated). The optical isolator can prevent reflected light of the laser light emitted from a laser light source from being returned to the light source and making the oscillation unstable.

EXAMPLES

Hereinafter, the present invention will be described in more detail with reference to examples and comparative examples, but the present invention is not limited to the following examples.

### Examples 1 to 5, Comparative Examples 1 to 4, and Reference Examples 1 and 2

Predetermined amounts of a terbium oxide powder ($Tb_4O_7$, manufactured by Shin-Etsu Chemical Co., Ltd.), a lutetium oxide powder ($Lu_2O_3$, manufactured by Shin-Etsu Chemical Co., Ltd.), a gadolinium oxide powder ($Gd_2O_3$, manufactured by Shin-Etsu Chemical Co., Ltd.), and an aluminum oxide powder (manufactured by TAIMEI CHEMICALS CO., LTD.) with a purity of 99.999% or greater were weighed to obtain the compositions of composite oxides of Examples 1 to 5, Comparative Examples 1 to 4, and Reference Examples 1 and 2 listed in Table 1, and the powders were mixed. In addition, tetraethoxysilane ($Si(OEt)_4$, manufactured by KISHIDA CHEMICAL CO., LTD., hereinafter referred to as TEOS) was added as a sintering aid in a manner that the amount thereof in terms of Si reached 1000 ppm in the obtained transparent ceramic.

Furthermore, this raw-material mixture was subjected to a wet ball mill treatment using ethanol (manufactured by Kanto Chemical Co., Inc.) as a dispersion medium. In addition, in TEOS, a 2 mm alumina ball (manufactured by Nikkato Corporation) was used as a medium of the ball mill. 1 wt% of polyvinyl alcohol (manufactured by Kanto Chemical Co., Inc.) was added as a binding agent to the slurry obtained by the ball mill treatment, and granulation was performed by spray drying. The obtained granules were subjected to uniaxial press molding and a CIP treatment to have a predetermined shape and were degreased in air in a muffle furnace at 500°C. Next, a vacuum sintering treatment ($10^{-3}$ Pa, 1700°C) and a subsequent HIP treatment (198 MPa, 1600°C) were performed, and an atmospheric annealing treatment was performed at 1450°C for 10 hours. The obtained transparent body was polished and processed to have a diameter of 5 mm, a length of 20 mm, and an optical surface accuracy of $\lambda/8$, thereby obtaining a ceramic sample. Next, the linear transmittance, the extinction ratio, the thermal conductivity, the beam diameter change rate, and the Verdet constant of the ceramic sample were measured.

**Measurement of linear transmittance**

The linear transmittance was determined by using an in-house produced optical system using a light source (manufactured by NKT Photonics), and a power meter and a Ge photodetector (manufactured by Gentec), measuring the intensity of light when light having a wavelength of 1064 nm was transmitted with a beam diameter of 1 to 3 mm ø, and performing calculation according to the following equation.

$$\text{Linear transmittance (\%)} = I/I_0 \times 100$$

In the equation, I represents the intensity of transmitted light (the intensity of light that was linearly transmitted through a sample having a length of 20 mm), and $I_0$ represents the intensity of incident light.

**Measurement of extinction ratio**

The extinction ratio was determined by using an in-house produced optical system using a light source (manufactured by NKT Photonics), a collimator lens, a polarizer, a work stage, an analyzer, and a power meter and a Ge photodetector (manufactured by Gentec), transmitting light having a wavelength of 1064 nm through a sample in a state in which the beam diameter was set to 3 mm ø, which was large, measuring an intensity $I_0$' of light when a polarizing surface of the analyzer and a polarizing surface of the polarizer were allowed to coincide with each other in the state, measuring a received light intensity I' again in a state in which the polarizing surface of the analyzer rotated by 90 degrees to be orthogonal to the polarizing surface of the polarizer, and performing calculation according to the following equation.

$$\text{Extinction Ratio (dB)} = -10 \times \log_{10} (I'/I_0')$$

**Measurement of thermal conductivity**

The thermal conductivity was measured in conformity with JIS R 1611-1997 (test methods of thermal diffusivity, specific heat, and thermal conductivity for fine ceramics by a laser flash method). A disk-shaped transparent ceramic sintered body having a diameter of 10 mm and a thickness of 2 mm was prepared, and one surface of the sintered body was irradiated with a laser. The difference in temperature rise between the laser-irradiated surface and the surface opposite to the laser-irradiated surface was measured, and a thermal diffusivity $\alpha$ was determined by a half-time method. A density $\rho$ was measured by the Archimedes method, and a specific heat C was measured by differential scanning thermogravimetry. The thermal conductivity was determined by the product of the thermal diffusivity $\alpha$, the density $\rho$, and the specific heat C.

**Measurement of beam diameter change rate**

A high power laser (beam diameter: 1.6 mm) (manufactured by IPG Photonics Japan, Ltd.) emitted a spatially parallel ray with an output of 100 W, and a beam diameter Ra was measured by a beam profiler. Subsequently, a sample was set on the emitted ray line, and a beam diameter Rb when the sample was set was measured again by a beam profiler. The beam diameter change rate was determined from the measurement results of Ra and Rb according to the following equation.

$$\text{Beam diameter change rate (\%)} = |Ra - Rb|/R1 \times 100$$

**Measurement of Verdet constant**

First, a ceramic sample was mounted on the optical isolator illustrated in FIG. 1. That is, each of the obtained ceramic samples was inserted into a center of a neodymium-iron-boron magnet having an outer diameter of 32 mm, an inner diameter of 6 mm, and a length of 40 mm, and polarizers were inserted into both ends of the magnet. Next, using a high power laser (beam diameter 1.6 mm) (manufactured by IPG Photonics Japan, Ltd.), high power laser beams having a wavelength of 1064 nm were made incident from both end surfaces to determine a Faraday rotation angle $\theta$. The Faraday rotation angle $\theta$ was set as an angle indicating the maximum transmission when the polarizer on the emission side rotated. Next, the Verdet constant was calculated according to the following equation. Furthermore, as the magnitude (H) of a magnetic field applied to the sample, a value calculated by simulation from the dimensions of the measurement system, a residual magnetic flux density (Br), and a holding force (Hc) was used.

$$\theta = V \times H \times L$$

In the equation, $\theta$ represents the Faraday rotation angle (Rad), V represents the Verdet constant (Rad/T·m), H represents the magnitude (T) of the magnetic field, and L represents the length of the Faraday rotator (0.020 m in this case).

The measurement results of Examples 1 to 5 and Comparative Examples 1 to 4 are listed in Table 1. In addition, the average ionic radius was determined from Formula (2). The results are also listed in Table 1.

EP 4 722 178 A1

[Table 1]

Table 1: Composition of composite oxide and measurement results

| | Composition | Average ionic radius (pm) | Verdet constant (Rad/T·m) | Thermal conductivity (W/m·K) | Linear transmittance (%) | Extinction ratio (dB) | Beam diameter change rate (%) |
|---|---|---|---|---|---|---|---|
| Example 1 | $(Gd_{0.05}Lu_{0.35}Tb_{0.60})_3Al_5O_{12}$ | 101.9 | 31 | 4.5 | 81.2 | 43 | 6 |
| Example 2 | $(Gd_{0.10}Lu_{0.30}Tb_{0.60})_3Al_5O_{12}$ | 102.2 | 31 | 4.8 | 81.1 | 42 | 6 |
| Example 3 | $(Gd_{0.30}Lu_{0.10}Tb_{0.60})_3Al_5O_{12}$ | 103.8 | 31 | 5.1 | 80.9 | 43 | 7 |
| Example 4 | $(Gd_{0.10}Lu_{0.10}Tb_{0.80})_3Al_5O_{12}$ | 103.5 | 45 | 5.2 | 80.6 | 41 | 8 |
| Example 5 | $(Gd_{0.02}Lu_{0.03}Tb_{0.95})_3Al_5O_{12}$ | 103.8 | 56 | 5.5 | 80.2 | 41 | 10 |
| Comparative Example 1 | $(Gd_{0.40}Tb_{0.60})_3Al_5O_{12}$ | 104.5 | Impossible to measure due to melting during sintering | | | | |
| Comparative Example 2 | $(Gd_{0.36}Lu_{0.04}Tb_{0.60})_3Al_5O_{12}$ | 104.2 | Impossible to measure due to melting during sintering | | | | |
| Comparative Example 3 | $(Gd_{0.20}Tb_{0.80})_3Al_5O_{12}$ | 104.3 | Impossible to measure due to melting during sintering | | | | |
| Comparative Example 4 | $(Gd_{0.20}Lu_{0.40}Tb_{0.40})_3Al_5O_{12}$ | 101.7 | 26 | 4.2 | 81.4 | 42 | 4 |
| Reference Example 1 | $(Lu_{0.40}Tb_{0.60})_3Al_5O_{12}$ | 101.5 | 31 | 4.8 | 80.9 | 45 | 6 |
| Reference Example 2 | $Tb_3Al_5O_{12}$ | 104 | 60 | 6 | 80.6 | 38 | 12 |

As listed in Table 1, all the ceramic samples of Examples 1 to 5 with an average ionic radius of less than 104.2 pm were highly transparent, and the beam diameter change rates were also 10% or less. In contrast, in Comparative Examples 1 to 3 in which the average ionic radius was 104.2 pm or greater, the ceramic was melted during sintering and was not made transparent. It is presumed that the aluminum garnet was not stable at a high temperature and was in a liquid phase when the average ionic radius was 104.2 pm or greater. In addition, in Comparative Example 4, the ceramic was made transparent, but the Verdet constant was small, and the ceramic was required to be lengthened in order to be used as a Faraday rotator, which was not preferable. The measurement results of LuTAG in Reference Example 1 and TAG in Reference Example 2 are also shown. Examples 1 to 5 are considered to be usable for high power without being inferior to the above-described examples.

**Examples 6 to 10**

Ceramic samples were prepared in the same manner as in Example 3 and subjected to each test except that Sc was further added as a sintering aid as listed in Table 2 and the amount of Si added was changed. The results are listed in Table 2.

[Table 2]

Table 2: Amount of sintering aid added and measurement results

| | $(Gd_{0.30}Lu_{0.10}Tb_{0.60})_3Al_5O_{12}$ | | Average ionic radius (pm) | Verdet constant (Rad/T·m) | Thermal conductivity (W/m·K) | **Linear** transmittance (%) | Extinction ratio (dB) | Beam diameter change rate (%) |
|---|---|---|---|---|---|---|---|---|
| | Sc (wt%) | Si (ppm) | | | | | | |
| Example 6 | 0.5 | 1000 | 103.8 | 31 | 5.1 | 81.2 | 42 | 6 |
| Example 7 | 1 | 1000 | 103.8 | 31 | 5 | 81.3 | 43 | 6 |
| Example 8 | 1.5 | 500 | 103.8 | 31 | 5 | 81.3 | 42 | 7 |
| Example 9 | 2 | 400 | 103.8 | 31 | 4.9 | 81.4 | 41 | 7 |
| Example 10 | 3 | 100 | 103.8 | 31 | 4.9 | 81.4 | 40 | 7 |

As listed in Table 2, in any of the ceramic samples of Examples 6 to 10, there is no particular problem in the properties when Sc and Si were added, and thus, the ceramic samples can be used for a high power of greater than 100 W. In addition, when Sc and Si are added, the compositional range for transparency is widened, and highly transparent ceramics can be provided even when there are variation factors such as a weighing error and a difference in the amount of adsorbed moisture in raw materials.

**Examples 11 to 13 and Comparative Examples 5 to 7**

Ceramic samples were prepared in the same manner as in Example 1 and subjected to each test, except that Y was used instead of Lu and La was used instead of Gd to obtain the compositions of the composite oxides of Examples 11 to 13 and Comparative Examples 5 to 7 listed in Table 3. The results are listed in Table 3. Furthermore, yttrium oxide powder ($Y_2O_3$, manufactured by Shin-Etsu Chemical Co., Ltd.) having a purity of 99.999% or greater and lanthanum oxide powder ($La_2O_3$, manufactured by Shin-Etsu Chemical Co., Ltd.) were used as the raw materials.

[Table 3]

Table 3: Composition of composite oxide and measurement results

| | Composition | Average ionic radius (pm) | Verdet constant (Rad/T·m) | Thermal conductivity (W/m·K) | Linear transmittancratio e (%) | Extinction (dB) | Beam diameter change rate (%) |
|---|---|---|---|---|---|---|---|
| Example 11 | $(La_{0.01}Y_{0.39}Tb_{0.60})_3Al_5O_{12}$ | 103.3 | 31 | 4.7 | 80.5 | 42 | 9 |
| Example 12 | $(Gd_{0.10}Y_{0.30}Tb_{0.60})_3Al_5O_{12}$ | 103.5 | 31 | 4.6 | 81.1 | 41 | 6 |
| Example 13 | $(Gd_{0.05}Y_{0.35}Tb_{0.60})_3Al_5O_{12}$ | 103.3 | 31 | 4.6 | 81.2 | 41 | 6 |
| Comparative Example 5 | $(Gd_{0.35}Y_{0.05}Tb_{0.60})_3Al_5O_{12}$ | 104.4 | Impossible to measure due to melting during sintering | | | | |
| Comparative Example 6 | $(Gd_{0.30}Y_{0.10}Tb_{0.60})_3Al_5O_{12}$ | 104.2 | Impossible to measure due to melting during sintering | | | | |
| Comparative Example 7 | $(La_{0.10}Y_{0.30}Tb_{0.60})_3Al_5O_{12}$ | 104.6 | Impossible to measure due to melting during sintering | | | | |

As listed in Table 3, it can be seen that even when Y is used instead of Lu, and La is used instead of Gd, the ceramic samples of Examples 11 to 13 with an average ionic diameter of less than 104.2 pm are highly transparent, and thus, it is possible to develop the application to high power. In contrast, in Comparative Examples 5 to 7 in which the average ionic radius was 104.2 pm or greater, the ceramics were melted during sintering.

Although the present invention has been described using the above embodiments, the present invention is not limited to the above embodiments. Changes such as other embodiments, additions, changes, and deletions may be made within the scope that can be conceived by those skilled in the art, and also fall within the scope of the present invention as long as the actions and effects of the present invention are exhibited in any aspect.

REFERENCE SYMBOL LIST

- 100 Optical isolator
- 102 Housing
- 110 Faraday rotator
- 120 Polarizer
- 130 Analyzer
- 140 Magnet

**Claims**

1. A transparent ceramic for a magneto-optical element, comprising a sintered body of a composite oxide represented by Formula (1),

$$(Tb_{1-x-y}R1_xR2_y)_3Al_5O_{12} \ldots \qquad \text{Formula (1)}$$

wherein R1 represents an element selected from the group consisting of Y and Lu, R2 represents an element selected from the group consisting of Gd and La, and $0 < x \leq 0.4$, $0 < y \leq 0.4$, and $0.05 \leq x + y \leq 0.45$ are satisfied, wherein an average ionic radius of a rare earth element in the composite oxide satisfies Formula (2),

$$\text{average ionic radius} = (1 - x - y)D_{Tb} + xD_{R1} + yD_{R2} < 104.2 \ldots \text{Formula (2)}$$

wherein, $D_{Tb}$ represents an ionic radius of $Tb^{3+}$ at an 8-coordination site, $D_{R1}$ represents an ionic radius of $R1^{3+}$ at the 8-coordination site, and $D_{R2}$ represents an ionic radius of $R2^{3+}$ at the 8-coordination site.

2. The transparent ceramic for a magneto-optical element according to claim 1, further comprising Sc as a sintering aid in an amount of 3% by mass or less.

3. The transparent ceramic for a magneto-optical element according to claim 1 or 2, further comprising Si as a sintering aid in an amount of 100 ppm by mass or greater and 1000 ppm by mass or less.

4. The transparent ceramic for a magneto-optical element according to claim 1 or 2, wherein R1 represents Lu and R2 represents Gd.

5. The transparent ceramic for a magneto-optical element according to claim 1 or 2, wherein a thermal conductivity is 4.5 W/m·K or greater.

6. The transparent ceramic for a magneto-optical element according to claim 1 or 2, wherein a linear transmittance at 1060 nm is 78% or greater.

7. The transparent ceramic for a magneto-optical element according to claim 1 or 2, wherein a Verdet constant is 30 Rad/T·m or greater.

8. A magneto-optical device comprising the transparent ceramic for a magneto-optical element according to any one of claims 1 to 7.

9. The magneto-optical device according to claim 8, wherein the magneto-optical device is an optical isolator that includes the transparent ceramic for a magneto-optical element as a Faraday rotator and polarizing materials in front and rear of the Faraday rotator on an optical axis, and that is usable in a wavelength range of 0.9 μm or greater and 1.1 μm or less.

FIG. 1

## INTERNATIONAL SEARCH REPORT

| International application No. |
| --- |
| **PCT/JP2024/018600** |

| A. | CLASSIFICATION OF SUBJECT MATTER |
| --- | --- |

*C04B 35/44*(2006.01)i; *C04B 35/50*(2006.01)i; *G02B 27/28*(2006.01)i; *G02F 1/09*(2006.01)i
FI: C04B35/44; C04B35/50; G02F1/09 501; G02B27/28

According to International Patent Classification (IPC) or to both national classification and IPC

| B. | FIELDS SEARCHED |
| --- | --- |

Minimum documentation searched (classification system followed by classification symbols)

C04B35/00-C04B35/84; G02B27/28; G02F1/09

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2015/186656 A1 (SHIN-ETSU CHEMICAL CO., LTD.) 10 December 2015 (2015-12-10) | 1-9 |
| A | JP 2019-202916 A (SHIN-ETSU CHEMICAL CO., LTD.) 28 November 2019 (2019-11-28) | 1-9 |
| A | JP 2013-543525 A (NITTO DENKO CORPORATION) 05 December 2013 (2013-12-05) | 1-9 |
| A | JP 2017-58550 A (UBE INDUSTRIES, LTD.) 23 March 2017 (2017-03-23) | 1-9 |
| A | JP 2004-300409 A (NANTEX INDUSTRY CO., LTD.) 28 October 2004 (2004-10-28) | 1-9 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 June 2024** | **16 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/018600**

| Patent document cited in search report | | | Publication date (day/month/year) | Patent family member(s) | | | Publication date (day/month/year) |
|---|---|---|---|---|---|---|---|
| WO | 2015/186656 | A1 | 10 December 2015 | US | 2017/0205643 | A1 | |
| JP | 2019-202916 | A | 28 November 2019 | US | 2019/0359496 | A1 | |
| | | | | CN | 110526704 | A | |
| JP | 2013-543525 | A | 05 December 2013 | US | 2012/0068213 | A1 | |
| | | | | CN | 103228762 | A | |
| JP | 2017-58550 | A | 23 March 2017 | (Family: none) | | | |
| JP | 2004-300409 | A | 28 October 2004 | US | 2004/0188655 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011213552 A
- JP 6438588 B
- JP 6879264 B
- JP 6881390 B

**Non-patent literature cited in the description**

- **SHANNON et al.** *Acta A*, 1976, vol. 32, 751